# EUROPEAN PATENT APPLICATION

(11) **EP 4 733 084 A1**
(43) Date of publication of application: **29.04.2026**
(21) Application number: 25151190.3
(22) Date of filing: 10.01.2025
(51) Int. Cl.: B60B 5/02, B60B 27/02, B60B 1/00, B60B 1/04

(54) **SPLIT-TYPE CARBON FIBER SPOKE PLATE, HUB, WHEEL**

(30) Priority: 23.10.2024 CN 202411486748
(71) Applicant: Xiamen Riding Beauty Sports Technology Co., Ltd, Xiamen, Fujian (CN)
(72) Inventor: LIU, Mengmeng, Xiamen (CN)
(74) Representative: Metida

(57) **Abstract**

The present disclosure relates to a split-type carbon fiber spoke plate, comprising a plate body (110) and a first mounting hole (101) formed in a middle of the plate body (110), an inner wall of the first mounting hole (101) is obliquely arranged, a sectional shape of the first mounting hole (101) is non-circular, and the plate body (110) is made of a carbon fiber material. Additionally, a hub, a wheel, and a bicycle are also disclosed. In the present disclosure, the spoke plate (100) is made of carbon fiber material, which significantly reduces the overall weight compared to traditional metal spoke plates, thereby contributing to a reduction in the overall weight of the hub. Furthermore, the present disclosure enhances the strength of the hub.

## Description

### TECHNICAL FIELD

The present disclosure relates to the technical field of bicycles, and in particular to a split-type carbon fiber spoke plate, a hub, a wheel and a bicycle.

### BACKGROUND

The bicycle wheel is a key component that converts the rider's pedaling into forward speed, typically consisting of a central hub (HUB), spokes (or wheel spokes) (SPOKES), and a rim (RIM) (or wheel rim). The hub (HUB) is the core part of the wheel, containing bearings inside to support and rotate the wheel; the hub shell (Hub shell) serves as a pivotal component, with all the spokes connected to it to achieve force transmission and balance among them.

The hub is an important part of the bicycle wheel hub, usually comprising a spoke plate and a hub shell body. The spoke plate (also known as a flange) is used for installing spokes and is provided on the hub shell body.

The main types of existing hubs are as follows:
1. The hub shell body and the spoke plate for installing spokes are integrated and made of metal. To support force transmission, the spoke plates are thick and heavy, which is not conducive to weight control of the hub.
2. Although the known design of a spoke installation plate structure separated from the hub shell body also achieves the separation of the spoke installation plate and the hub shell body, such existing structures still have issues such as the need for bonding with spokes, making them non-detachable. If one spoke is damaged, the entire spoke installation plate it belongs to needs to be replaced, as in CN113942340B; or they require the use of specially customized integrated spokes, making it difficult to obtain repair parts, as in CN219727734U.

The weight of all bicycle accessories, including the hub, constitutes the rider's riding load. While meeting the usage strength requirements, the lighter the weight, the better. As the installation carrier for precision accessories such as bearings, the hub experiences the tensile force of the spokes transmitted through the spoke plate to the hub shell body, accelerating the fatigue deformation of the hub shell body and compromising the stability and service life of the entire hub. Therefore, there is an urgent need for a hub structure that can reduce the weight of the hub and improve its overall strength.

### SUMMARY

The objective of the present disclosure is to provide a split-type carbon fiber spoke plate, hub, wheel, and bicycle that overcome the current dilemma of achieving both lightweight and strength in bicycle hubs, thereby realizing lightweight while improving the overall strength of the hub.

To achieve this goal, the present disclosure discloses a split-type carbon fiber spoke plate, a plate body and a first mounting hole formed in a middle of the plate body, an inner wall of the first mounting hole is obliquely arranged, a sectional shape of the first mounting hole is non-circular, and the plate body is made of a carbon fiber material.

Preferably, the middle of the plate body is provided with a connecting portion, the first mounting hole is formed in the connecting portion, and the connecting portion protrudes from one side or two sides of the plate body; and the sectional shape of the first mounting hole is polygonal, or a shape formed by a plurality of arc segments and straight segments connected end to end.

In an embodiment, an edge of the plate body extends in a direction away from the first mounting hole to form a first carbon fiber sheet and a second carbon fiber sheet, a mounting space for embedding spokes is formed between the first carbon fiber sheet and the second carbon fiber sheet, the mounting space includes a first embedding groove and a second embedding groove, the first embedding groove and the second embedding groove are alternately arranged along a circumference of the spoke plate, and a width b of the second embedding groove is greater than a width a of the first embedding groove.

In an embodiment, the edge of the plate body is curved upwards to form a second mounting portion, a side of the second mounting portion is provided with a second mounting hole, an mounting space is formed between the second mounting portion and the spoke plate, and the mounting space communicates with the second mounting hole; an upper end portion of the second mounting portion extends into the spoke plate to form an extension segment, the second mounting hole is used for clamping an end of the spoke, and the extension segment covers the end; and the mounting space is provided with a second mounting groove at a position corresponding to the second mounting hole, and the end is embedded in the second mounting groove.

In an embodiment, the plate body is provided with a fourth groove for mounting spokes; one end of the spoke extends to both sides to form a mounting portion, and the mounting portion is mounted in the fourth groove; and the plate body is fixedly connected with a fourth cover plate, and the spoke, the spoke plate and the fourth cover plate are fixedly connected through an adhesive.

The present disclosure also discloses a hub, which comprises a hub shell body and the spoke plate; the hub shell body is provided with a first mounting position close to one end of the hub shell body, and the hub shell body is provided with a second mounting position close to another end of the hub shell body; the first mounting position is used for mounting the spoke plate, and the second mounting position is used for mounting the spoke plate; and the first mounting position and the second mounting position are matched with the first mounting hole.

The present disclosure also discloses a wheel, which comprises a tire, a rim, a spoke and the hub; one end of the spoke is connected to a spoke plate of the hub, and another end of the spoke is connected to the rim; and the tire is provided on an outer side of the rim.

The present disclosure also discloses a bicycle, which comprises a frame and the wheel; and the wheel is mounted at a designated position on the frame.

The present disclosure offers the following advantages:
1. In the present disclosure, the spoke plate is detachable and fully separable from the hub shell body. Made of carbon fiber material, the overall weight of the spoke plate is significantly reduced compared to traditional metal spoke plates. Carbon fiber has a density of less than 65% that of aluminum alloy, while its tensile strength is more than 7.5 times and its modulus of elasticity is more than 8 times that of aluminum alloy. Using carbon fiber to make the spoke plate achieves higher strength and durability with lighter weight. The strength and fatigue resistance of the spoke plate in the present disclosure are better than those of traditional aluminum alloy materials, thereby addressing the durability issues of the spoke holes and the entire hub.
2. Carbon fiber spoke plates typically have higher strength and rigidity compared to ordinary metal spoke plates. Under the same load, the spoke plate is less prone to deformation, providing stable performance.

### BRIEF DESCRIPTION OF THE DRAWINGS

Fig. 1 shows an installation diagram of the hub and rim provided in Embodiment 1;
Fig. 2 shows a partially enlarged view of Section A provided in Embodiment 1;
Fig. 3 shows an overall structural diagram of the spoke plate provided in Embodiment 1;
Fig. 4 shows a side view diagram of the spoke plate provided in Embodiment 1;
Fig. 5 shows a sectional view diagram along B-B provided in Embodiment 1;
Fig. 6 shows a diagram of a hub with an aluminum alloy spoke plate provided in Embodiment 1;
Fig. 7 shows a force analysis diagram of the yield strength on the non-drive side of the split-type spoke plate provided in Embodiment 1;
Fig. 8 shows a force analysis diagram of the yield strength on the non-drive side of the integrated spoke plate provided in Embodiment 1;
Fig. 9 shows a force analysis diagram of the yield strength on the drive side of the split-type spoke plate provided in Embodiment 1;
Fig. 10 shows a force analysis diagram of the yield strength on the drive side of the integrated spoke plate provided in Embodiment 1;
Fig. 11 shows a force analysis diagram of ESTRN on the non-drive side of the split-type spoke plate provided in Embodiment 1;
Fig. 12 shows a force analysis diagram of ESTRN on the non-drive side of the integrated spoke plate provided in Embodiment 1;
Fig. 13 shows a force analysis diagram of ESTRN on the drive side of the split-type spoke plate provided in Embodiment 1;
Fig. 14 shows a force analysis diagram of ESTRN on the drive side of the integrated spoke plate provided in Embodiment 1;
Fig. 15 shows a force analysis diagram of URES on the non-drive side of the split-type spoke plate provided in Embodiment 1;
Fig. 16 shows a force analysis diagram of URES on the non-drive side of the integrated spoke plate provided in Embodiment 1;
Fig. 17 shows a force analysis diagram of URES on the drive side of the split-type spoke plate provided in Embodiment 1;
Fig. 18 shows a force analysis diagram of URES on the drive side of the integrated spoke plate provided in Embodiment 1;
Fig. 19 shows a structural diagram of the spoke plate provided in Embodiment 2;
Fig. 20 shows a side view diagram of the spoke plate provided in Embodiment 2;
Fig. 21 shows a diagram of spokes installed on the spoke plate provided in Embodiment 2;
Fig. 22 shows an installation diagram of the hub and rim provided in Embodiment 3;
Fig. 23 shows a partially enlarged view of Section C provided in Embodiment 3;
Fig. 24 shows an overall structural diagram of the spoke plate provided in Embodiment 3;
Fig. 25 shows a sectional view diagram of the spoke plate provided in Embodiment 3;
Fig. 26 shows a structural diagram of the third cover plate provided in Embodiment 3;
Fig. 27 shows a diagram of spokes installed on the spoke plate provided in Embodiment 3;
Fig. 28 shows a diagram of the hub installed on the rim provided in Embodiment 4;
Fig. 29 shows a partially enlarged view of Section D provided in Embodiment 4;
Fig. 30 shows an exploded view diagram of the hub provided in Embodiment 4;
Fig. 31 shows a structural diagram of the spoke plate provided in Embodiment 4;
Fig. 32 shows another exploded view diagram of the hub provided in Embodiment 4;
Fig. 33 shows an installation diagram of the hub provided in Embodiment 4;
Fig. 34 shows a structural diagram of the spoke provided in Embodiment 4;
Fig. 35(a) shows a structural diagram of the spoke provided in Embodiment 4;
Fig. 35(b) shows a structural diagram of the spoke provided in Embodiment 4;
Fig. 35(c) shows a structural diagram of the spoke provided in Embodiment 4;
Fig. 35(d) shows a structural diagram of the spoke provided in Embodiment 4;
Fig. 35(e) shows a structural diagram of the spoke provided in Embodiment 4;
Fig. 36 shows a sectional view diagram of the hub shell body provided in Embodiment 5;
Fig. 37 shows an exploded view diagram of the hub provided in Embodiment 5.

### Explanation of Symbols for Main Components:

100, spoke plate; 101, first mounting hole; 110, plate body; 120, first mounting portion; 121, spoke mounting hole; 1211, first hole; 1212, second hole; 1213, guiding groove; 122, first mounting groove; 123, retaining ring; 130, connecting portion; 131, reinforcing rib; 200, hub shell body; 210, first mounting position; 220, second mounting position; 310, first carbon fiber sheet; 320, second carbon fiber sheet; 330, first embedding groove; 340, second embedding groove; 400, third cover plate; 410, second mounting portion; 420, extension segment; 430, second mounting groove; 440, second mounting hole; 500, fourth cover plate; 510, fifth groove; 520, fourth groove; 600, spoke; 610, mounting portion; and 700, rim.

### DETAILED DESCRIPTION OF THE EMBODIMENTS

In order to make the purpose, technical solutions and advantages of the present disclosure more clear, the present disclosure will be further described in detail below with reference to the accompanying drawings and embodiments.

### Embodiment 1

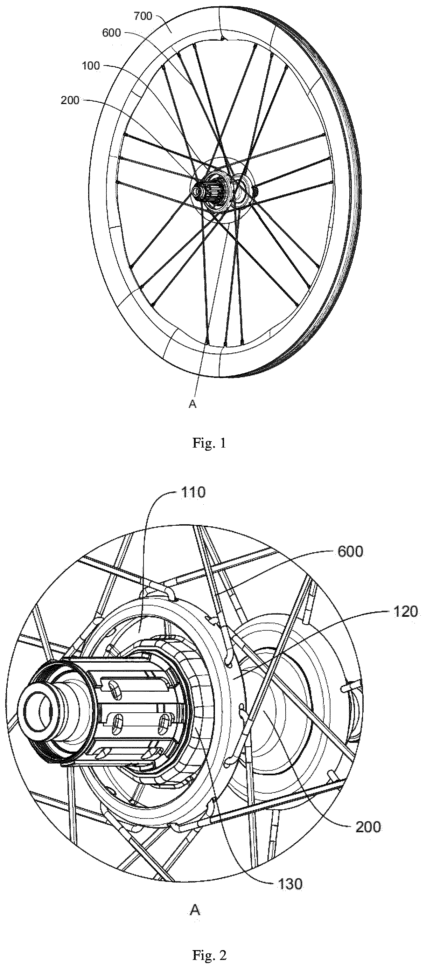

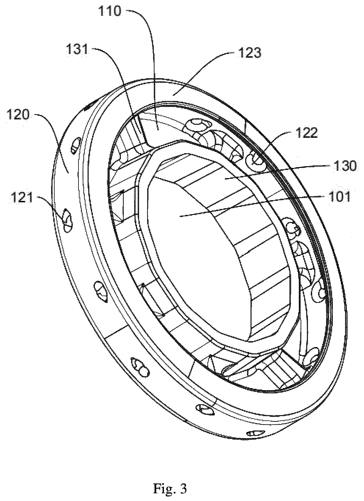

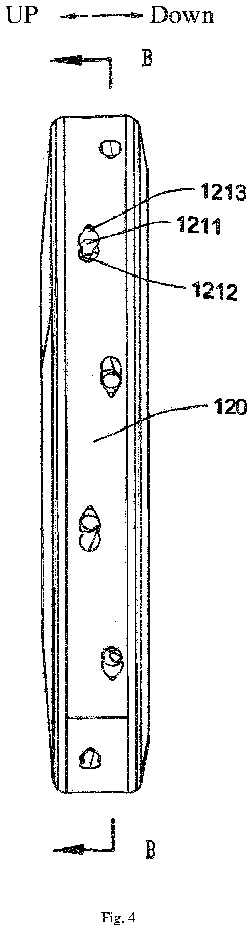

As shown in Figs. 1 to 5, the present disclosure discloses a split-type carbon fiber spoke plate, comprising: a plate body 110 and a first mounting hole 101 formed in a middle of the plate body 110, an inner wall of the first mounting hole 101 is obliquely arranged, a sectional shape of the first mounting hole 101 is non-circular, and the plate body 110 is made of a carbon fiber material.

In this embodiment, the spoke plate 100 is made of carbon fiber material, which can reduce the weight of the hub and enhance overall strength. Table 1 below shows a performance comparison between carbon fiber material and aluminum alloy:

**Table 1**

| Performance Parameter | Carbon Fiber Material | Aluminum Alloy |
|---|---|---|
| Density (g/cm³) | 1.6 | 2.7 |
| Specific Modulus E/r (MPa m³/kg) | 71 | 26 |
| Specific Strength s/r (MPa m³/kg) | 0.4 | 0.2 |
| Fatigue Strength (Endurance Stress at Millions of Load Cycles) | 70%-80% of Ultimate Strength | 20%-35% of Ultimate Strength |
| Corrosion Resistance | Excellent | Average |
| Thermal Conductivity (W/mK) | 20 | 250 |
| Thermal Expansion Coefficient (1/K) | 2*10-6 | 22*10-6 |

As shown in Table 1, the spoke plate made of carbon fiber material in the present disclosure is not only lighter but also has better strength and fatigue resistance compared to traditional aluminum alloy materials. This addresses the durability issues of the spoke holes and the entire hub.

The beveled mating between the spoke plate 100 and the hub shell body 200 enhances the fastening force between them. When the bevel on the first mounting hole 101 mates with the bevel on the first mounting column, an additional frictional force is generated. This frictional force helps prevent relative movement between the parts, thereby increasing the tightness of the connection. Additionally, the beveled mating between the spoke plate 100 and the hub shell body 200 facilitates the mounting and adjustment of the parts.

In this embodiment, the middle of the plate body 110 is provided with a connecting portion 130, the first mounting hole 101 is formed in the connecting portion 130, and the connecting portion 130 protrudes from one side or two sides of the plate body 110; and the sectional shape of the first mounting hole 101 is polygonal, or a shape formed by a plurality of arc segments and straight segments connected end to end. Setting the cross-sections of the first mounting hole 101 and the first mounting column to be regular polygonal shapes, with chamfers or fillets at the corners of the regular polygons, can prevent relative rotation between the spoke plate 100 and the hub shell body 200. The arrangement of the connecting portion 130 appropriately extends the first mounting hole 101, increasing the mating area between the first mounting hole 101 and the first mounting column, thereby enhancing the stability and reliability of the mating.

In this embodiment, a first mounting groove 122 is provided on one side of the spoke mounting holes 121 close to the connecting portion 130. The first mounting groove 122 is used to install an end cap at the end of the spoke 600, allowing the spoke 600 to be fixed to the spoke plate 100.

The spoke mounting holes 121 are divided into two groups, one group being closer to the plate body 110 and the other group being farther from the plate body 110. These two groups of spoke mounting holes 121 are staggered on the first mounting portion 120. This staggered arrangement allows the spokes 600 to interlace with each other when weaving, providing more diversified weaving patterns for the spokes 600. A plurality of reinforcing ribs 131 are disposed between the connecting portion 130 and the first mounting portion 120.

In this embodiment, the spoke mounting hole 121 is composed of a first hole 1211 and a second hole 1212, and an axis of the first hole 1211 is connected to an axis of the first mounting hole 101; one end of the second hole 1212 is provided on one side of the first hole 1211 in a horizontal direction, and the second hole 1212 passes through the first hole 1211 obliquely; a guiding groove 1213 is provided on one side of the first hole 1211 far from the second hole 1212. The arrangement of the first hole 1211, the second hole 1212, and the guiding groove 1213 allows the spokes 600 on the spoke plate 100 to be installed in either a straight-pull or an angle-pull manner, expanding the application scope of the spoke plate 100. At the same time, it can also reduce the friction between the spokes 600 and the spoke plate 100.

The two groups of spoke mounting holes 121 face in opposite directions, with the positions of the first holes 1211 and the second holes 1212 in the two groups swapped. This allows the spokes 600 installed in the two groups of spoke mounting holes 121 to cross each other when angle-pulled.

An end of the first mounting portion 120 far from the plate body 110 extends towards the connecting portion 130 to form a retaining ring 123. The retaining ring 123 is designed to cover the position of the end cap at the end of the spoke 600, serving to protect the end cap of the spoke 600.

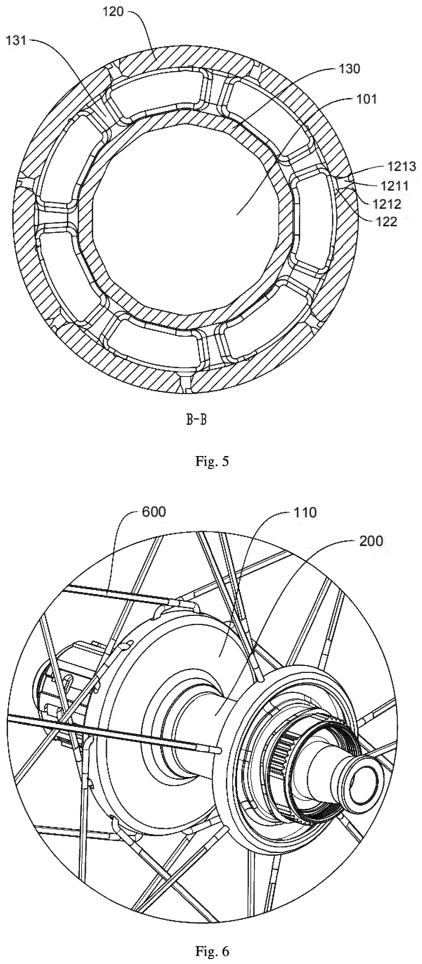

To further compare the performance of the carbon fiber spoke plate of the present disclosure with that of an aluminum alloy spoke plate, a comparative experiment was conducted between a hub formed by installing the split-type carbon fiber spoke plate of the present disclosure on an aluminum alloy hub shell body and a hub with an aluminum alloy spoke plate (as shown in Fig. 6).

Experimental Group: The hub with the carbon fiber spoke plate of the present disclosure installed on the aluminum alloy hub shell body. Spokes were installed on the carbon fiber spoke plate, and tensile force was applied to the spokes to measure various data of the spoke plate under tension.

Control Group: The hub with an aluminum alloy spoke plate, where the aluminum alloy spoke plate and the aluminum alloy hub shell body are integrated. Spokes (the same as those in the experimental group) were installed on the aluminum alloy spoke plate, and tensile force was applied to the spokes to measure various data of the spoke plate under tension.

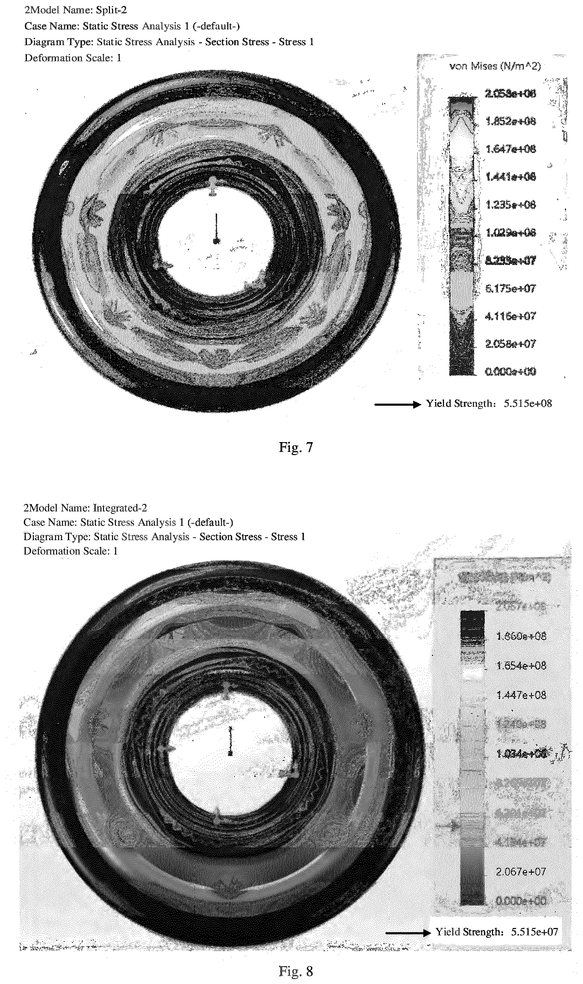

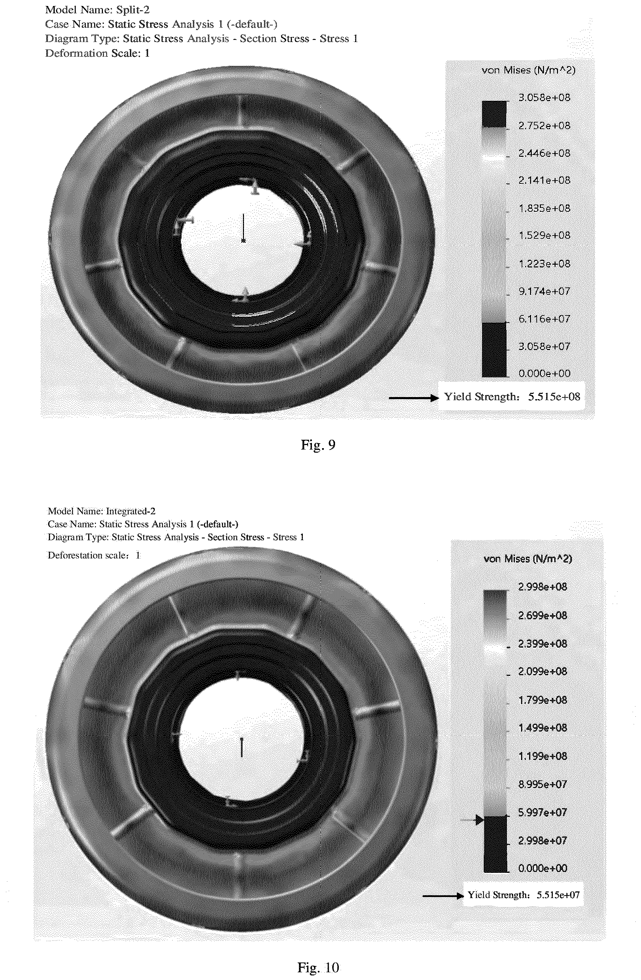

Yield Strength: It refers to the phenomenon where, during the tensile or compressive process of a material, when the stress reaches a certain value, a slight increase in stress results in a sharp increase in strain. Figs. 7 to 10 show the stress analysis diagrams of the yield strength for the split-type carbon fiber spoke plate of the present disclosure and the integrated aluminum alloy spoke plate. Wheelset conditions: 1. Same spokes; 2. Same lacing pattern, with all spokes subjected to 1400N of tensile force. The analysis results are shown in Table 2 below:

**Table 2**

| Items | Non-Drive Side | | Drive Side | |
|---|---|---|---|---|
| | Experimental Group | Control Group | Experimental Group | Control Group |
| Yield Strength Value | 5.52E+08 | 5.52E+07 | 5.52E+08 | 5.52E+07 |

As shown in Table 2, under the same load conditions, the split carbon fiber spoke plate can withstand significantly greater forces than the integrated aluminum alloy spoke plate, specifically 10 times that of the aluminum alloy spoke plate.

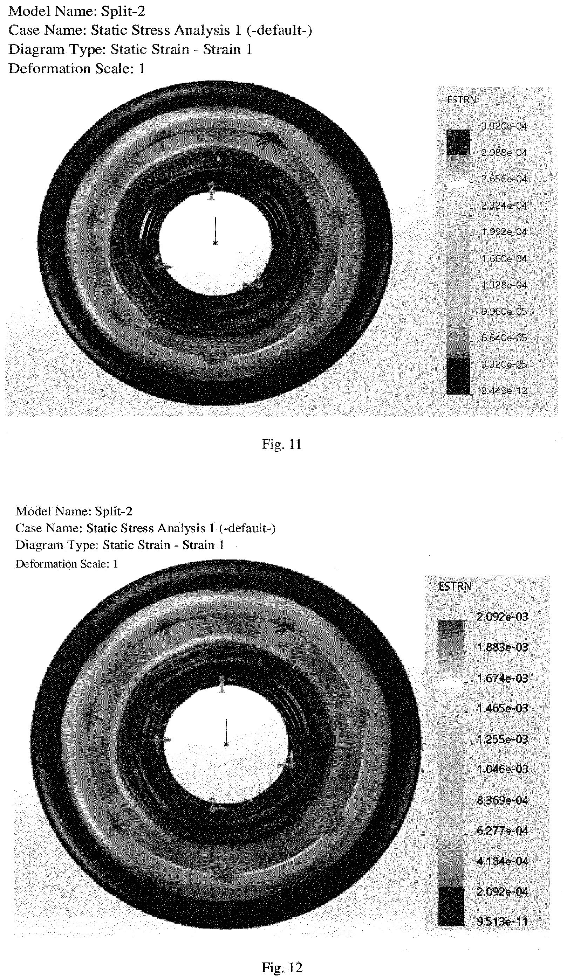

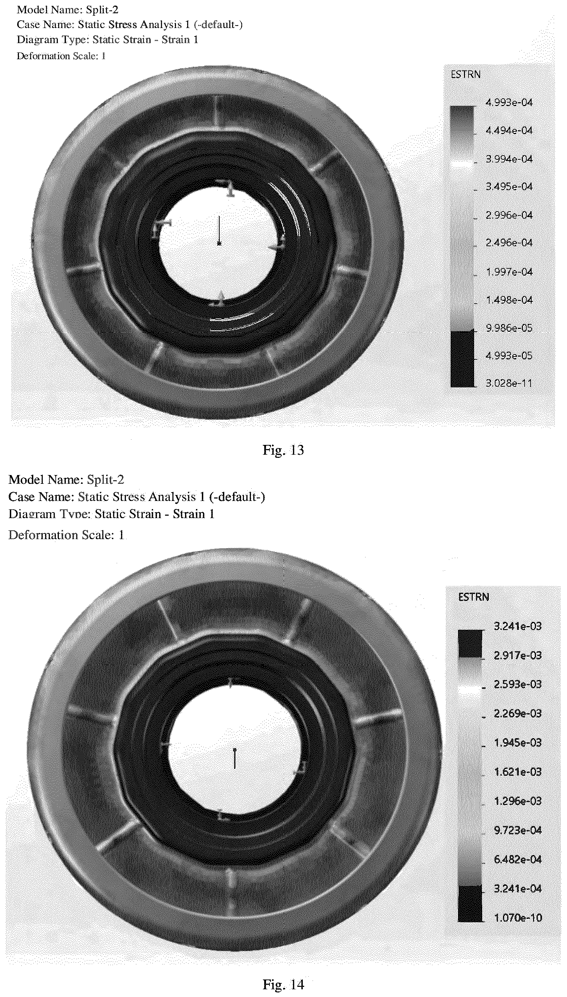

ESTRN: It describes the deformation of a material under stress. In finite element analysis, equivalent strain is an important parameter for measuring local deformation of a material, indicating the average degree of deformation under stress. Figs. 11 to 14 show the ESTRN stress analysis diagrams for the split-type carbon fiber spoke plate and the integrated aluminum alloy spoke plate of the present disclosure. Wheelset conditions: 1. Same spokes; 2. Same lacing pattern, with all spokes subjected to 1400N of tensile force. The analysis results are shown in Table 3 below:

**Table 3**

| Items | Non-Drive Side | | Drive Side | |
|---|---|---|---|---|
| | Experimental Group | Control Group | Experimental Group | Control Group |
| ESTRN Value | 6.64e-04-9.96e-04 | 4.18e-03-6.27e-03 | 4.99e-05-9.98e-05 | 3.24e-04-6.48e-04 |

As shown in Table 3, under the same load conditions and with the same amount of deformation, the split-type carbon fiber spoke plate requires at least 10 times the force to achieve the same deformation as the integrated aluminum alloy spoke plate.

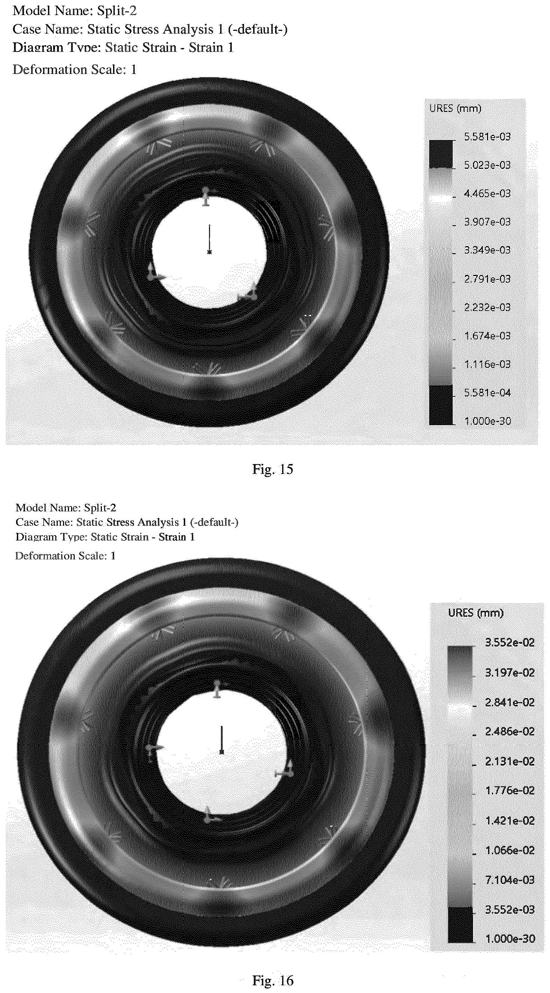

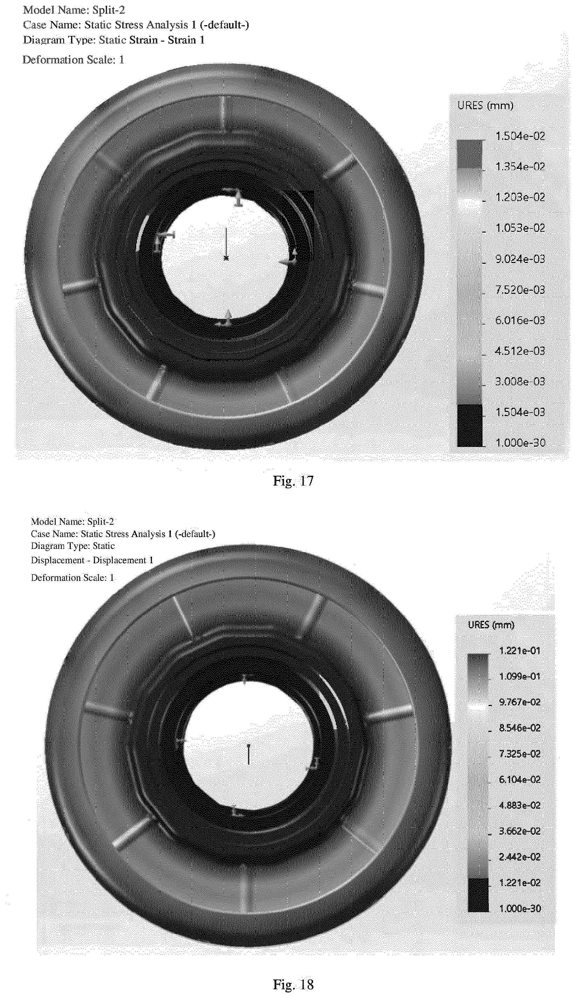

URES represents the resultant displacement of an object under the action of multiple forces, considering the combined effect of all forces. Figs. 15 to 18 show the URES stress analysis diagrams for the split-type carbon fiber spoke plate and the integrated aluminum alloy spoke plate of the present disclosure. Wheelset conditions: 1. Same spokes; 2. Same lacing pattern, with all spokes subjected to 1400N of tensile force. The analysis results are shown in Table 4 below:

**Table 4**

| Items | Non-Drive Side | | Drive Side | |
|---|---|---|---|---|
| | Experimental Group | Control Group | Experimental Group | Control Group |
| URES Value | 5.58E-03 | 3.55E-02 | 1.50E-02 | 1.22E-01 |

If the spoke plate is stretched to its failure point, the split-type carbon fiber spoke plate of the present disclosure requires a greater force. The force required for the split-type carbon fiber spoke plate to reach its failure point is at least 10 times that of the integrated aluminum alloy spoke plate in the control group.

### Embodiment 2

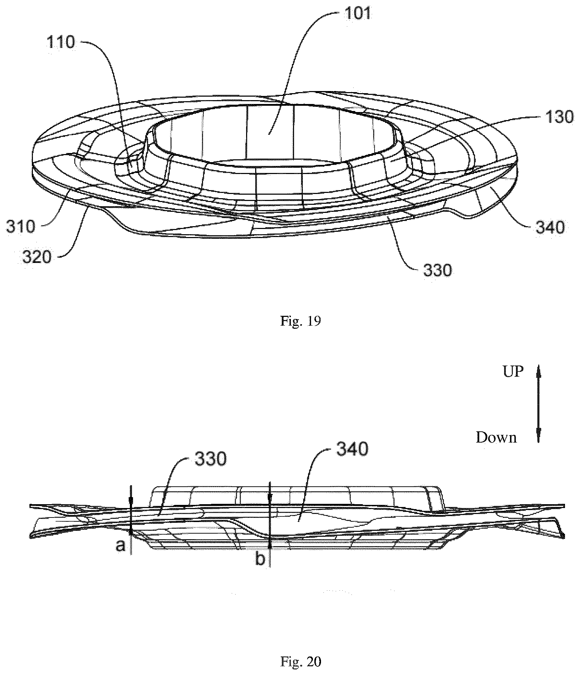

As shown in Figs. 19 to 21, the difference between this embodiment and Embodiment 1 is that an edge of the plate body 110 extends in a direction away from the first mounting hole 101 to form a first carbon fiber sheet 310 and a second carbon fiber sheet 320, a mounting space for embedding spokes 600 is formed between the first carbon fiber sheet 310 and the second carbon fiber sheet 320, the mounting space includes a first embedding groove 330 and a second embedding groove 340, the first embedding groove 330 and the second embedding groove 340 are alternately arranged along a circumference of the spoke plate 100, and a width b of the second embedding groove 340 is greater than a width a of the first embedding groove 330.

In this embodiment, four first embedding grooves 330 and four second embedding grooves 340 are arranged on the circumference of the spoke plate 100. The first embedding grooves 330 and the second embedding grooves 340 are evenly distributed around the spoke plate 100, ensuring that the spokes 600 can be installed with appropriate tension and symmetry, thereby providing excellent wheel performance and durability. Lightweight design is a crucial feature of carbon fiber bicycles, and the spoke plate 100 made of carbon fiber weighs only 8~10g while still maintaining high strength, meeting the lightweight requirements of carbon fiber bicycles. Additionally, carbon fiber materials possess excellent vibration absorption capabilities, which can reduce the vibration and noise generated during wheel operation.

Two ends of the first embedding groove 330 are respectively a first end and a second end, a height of the first end is lower than that of the second end, the first end of two adjacent first embedding grooves 330 is lower than the second end, and the first end and the second end of two adjacent first embedding grooves 330 are communicated to form the second embedding groove 340.

The first embedding groove 330 secures one spoke 600, while the second embedding groove 340 secures two spokes 600. In this embodiment, the first embedding groove 330 and the second embedding groove 340 effectively distribute the tensile and torsional forces exerted on the spokes 600, ensuring they are evenly spread throughout the entire wheel rim system. This reduces the risk of localized stress concentration, resulting in a longer service life for the wheelset. Additionally, the groove design simplifies and speeds up the installation and replacement process of the spokes 600, minimizing the complexity of operations during maintenance and spoke replacement, and thus improving maintenance efficiency.

In this embodiment, during use, the carbon fiber spokes 600 are fixed into the first embedding grooves 330, with the spokes 600 from two adjacent first embedding grooves 330 staggered within the second embedding grooves 340. In the aforementioned embodiment, the first end and the second end of two adjacent first embedding grooves 330 are connected through a transition curved surface. This design prevents the carbon fiber spokes 600 from being scratched by the transitions between the first embedding grooves 330 and the second embedding grooves 340, or from being bent or deformed.

### Embodiment 3

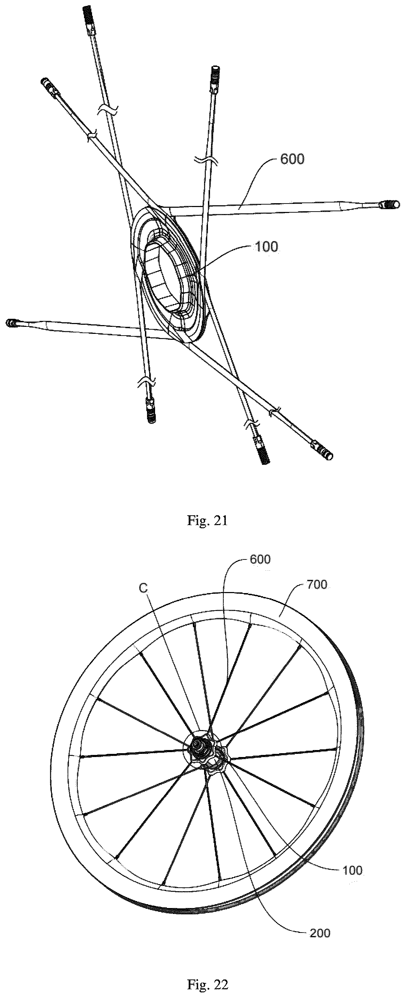

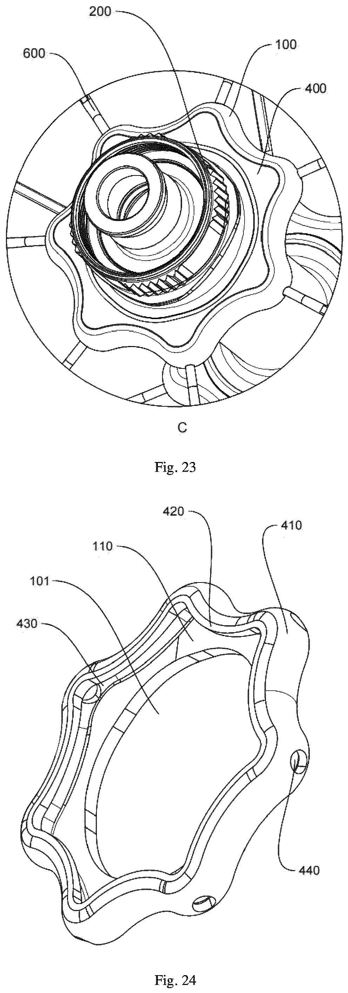

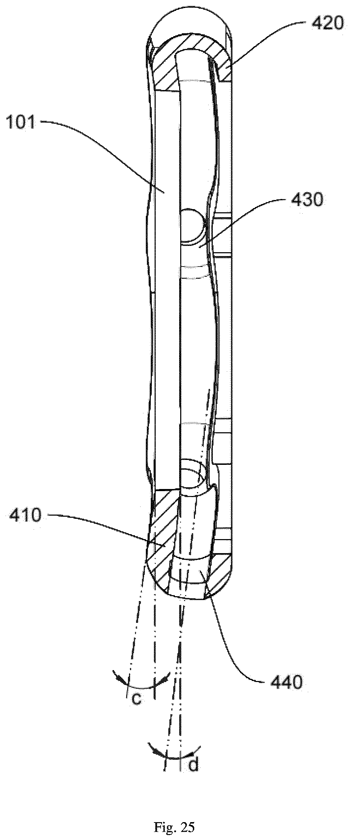

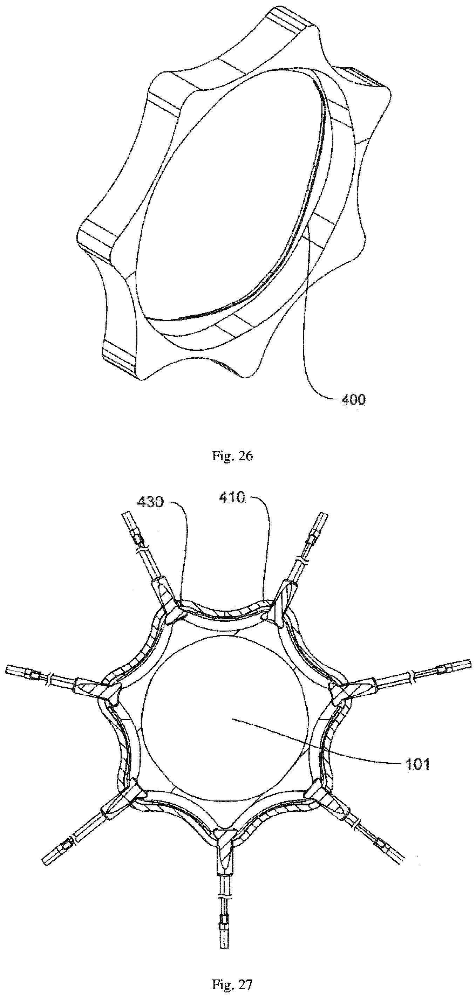

As shown in Figs. 22 to 27, the difference between this embodiment and Embodiment 1 is that the spoke plate 100 includes a plate body 110, the edge of the plate body 110 is curved upwards to form a second mounting portion 410, a side of the second mounting portion 410 is provided with a second mounting hole 440, an mounting space is formed between the second mounting portion 410 and the spoke plate 100, and the mounting space communicates with the second mounting hole 440; an upper end portion of the second mounting portion 410 extends into the spoke plate 100 to form an extension segment 420, the second mounting hole 440 is used for clamping an end of the spoke 600, and the extension segment 420 covers the end; and the mounting space protrudes away from the spoke plate 100 at the position corresponding to the second mounting hole 440 to form the second mounting groove 430, and the end is embedded in the second mounting groove 430.

The sectional shape of the second mounting groove 430 is U-shaped. When one end of the spoke 600 is installed in the second mounting groove 430, the end of the spoke 600 mates with the second mounting groove 430, thereby reducing the wobble of the spoke 600 and minimizing friction between the spoke 600 and the second mounting hole 440. This prevents the diameter of the second mounting hole 440 from rapidly increasing, thereby extending the service life of the spoke plate 100. Similarly, the surface of the second mounting groove 430 that contacts the spoke 600 is also U-shaped, which reduces wear caused by friction between the second mounting groove 430 and the end of the spoke.

There are 5 to 10 second mounting grooves 430 provided, with seven in this embodiment, evenly distributed on the side of the plate body 110. In this embodiment, the second mounting grooves 430 protrude in a direction away from the plate body 110, giving the spoke plate 100 an external contour resembling a seven-pointed star.

The extension segment 420 encloses to form a third groove, and the third cover plate 400 is embedded in the third groove; and a middle of the third cover plate 400 is provided with a third mounting hole, and the third mounting hole corresponds in position to the first mounting hole 101. In this embodiment, the third cover plate 400 is adhered to the groove using adhesive to prevent dust from entering the second mounting groove 430. Dust within the second mounting groove 430 can exacerbate friction between different components, leading to rapid wear and reduced component lifespan.

The second mounting portion 410 is inclined towards one axial end of the first mounting hole 101, forming an angle c with the plane of the spoke plate 100. The angle c ranges from 3° to 10°. In this embodiment, the plate body 110 and the bicycle rim 700 are not on the same horizontal plane, resulting in an angle between the spoke 600 and the spoke plate 100. To facilitate the installation of the spoke 600 and reduce stress after installation, the second mounting portion 410 is oriented towards the bicycle rim 700, forming an 8° angle with the plane of the plate body 110.

The second mounting hole 440 is inclined in the same direction as the second mounting portion 410, with the angle d between the axis of the second mounting hole 440 and the plane of the spoke plate 100 ranging from 3° to 10°. In this embodiment, since the spoke plate 100 and the bicycle rim 700 are not on the same horizontal plane, there is an angle between the spoke 600 and the spoke plate 100. To facilitate the installation of the spoke 600 and reduce friction between the installed spoke 600 and the second mounting hole 440, the second mounting portion 410 is oriented towards the bicycle rim 700, with the angle between the axis of the second mounting hole 440 and the plane of the plate body 110 set at 8°.

### Embodiment 4

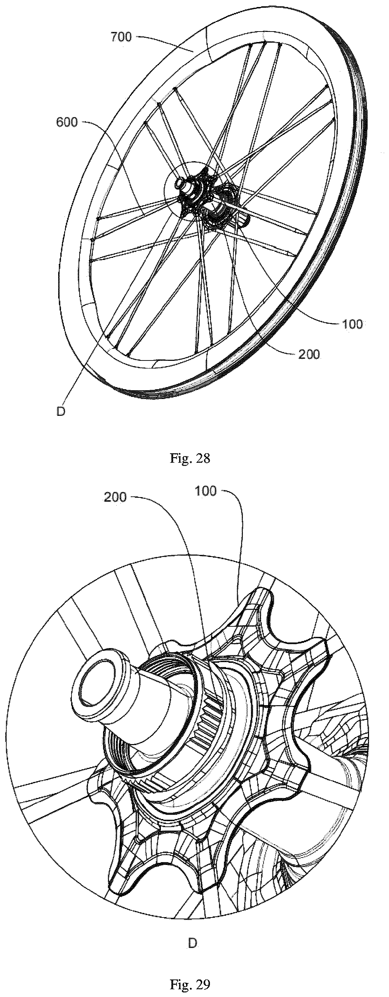

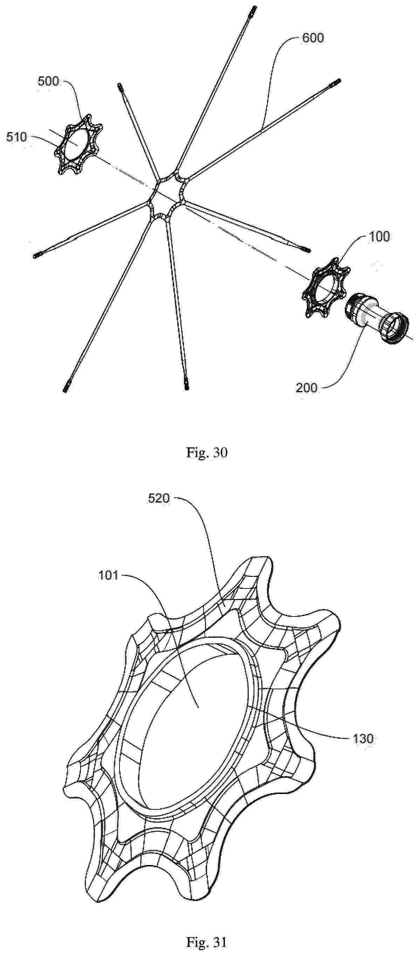

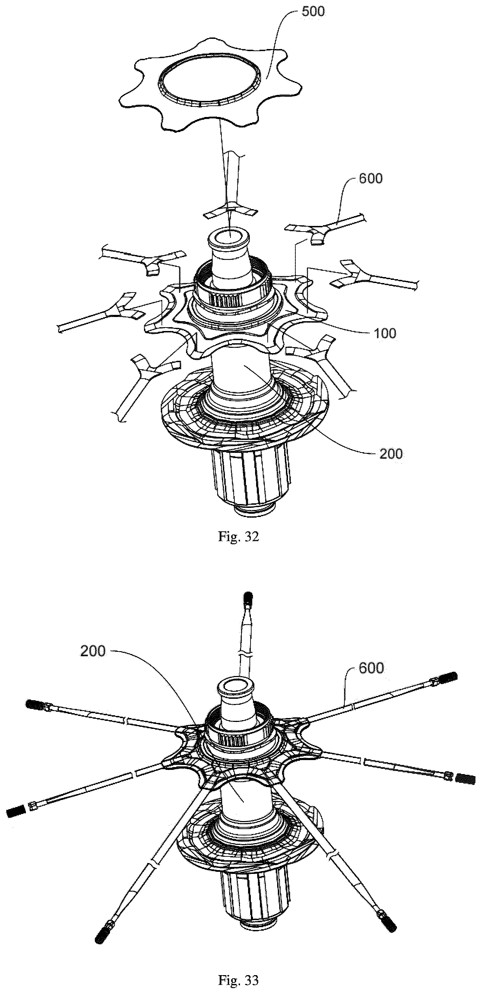

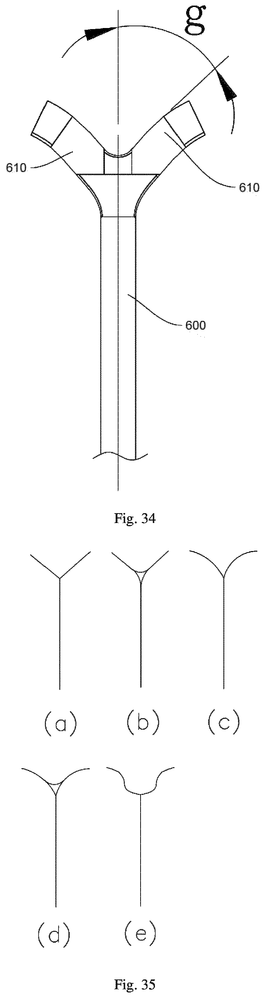

As shown in Figs. 28 to 35, the difference between this embodiment and Embodiment 1 is that the plate body 110 is provided with a fourth groove 520 for mounting spokes 600; one end of the spoke 600 extends to both sides to form a mounting portion 610, and the mounting portion 610 is mounted in the fourth groove 520; the plate body 110 is fixedly connected with a fourth cover plate 500, and the spoke 600, the spoke plate 100 and the fourth cover plate 500 are fixedly connected through an adhesive. In this embodiment, after the spoke 600 is installed in the fourth groove 520, the bifurcated mounting portion 610 at the end of the spoke 600 comes into contact with the side walls of the fourth groove 520, effectively distributing the force to the side wall of the fourth groove 520 and reducing localized stress on the spoke plate 100.

In this embodiment, the spoke 600 and the two mounting portions 610 form a Y-shape. The spokes 600 can be set individually, or the mounting portions 610 of adjacent spokes 600 can be interconnected, with a plurality of spokes 600 circling around to form an integrated structure.

A middle of the fourth cover plate 500 is provided with a fourth mounting hole, and the fourth cover plate 500 is provided with a fifth groove 510 for mounting spokes 600. In this embodiment, the fourth mounting hole coincides with the first mounting hole 101, allowing the hub shell body 200 to pass through. The presence of the fifth groove 510 ensures more stable and reliable installation of the spoke 600, and better alignment between the fourth cover plate 500 and the spoke plate 100.

### Embodiment 5

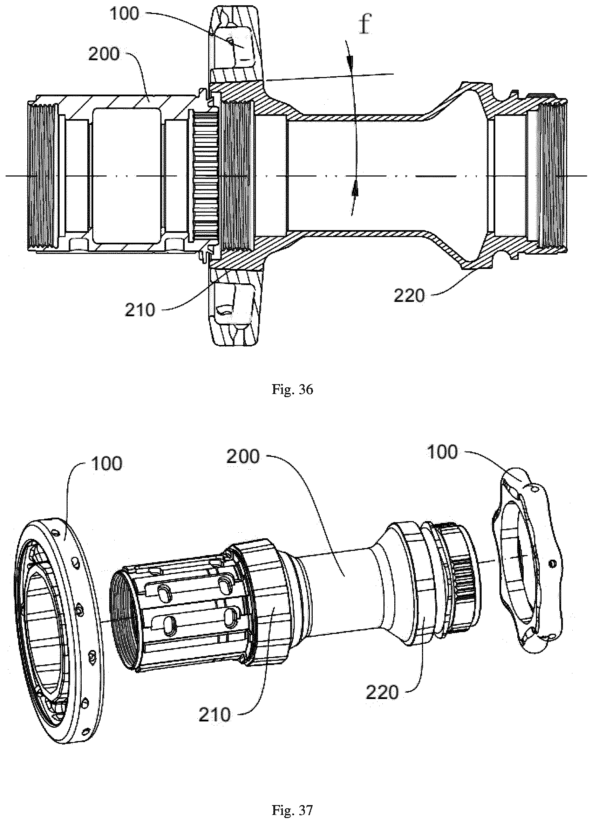

As shown in Figs. 36 to 37, a hub, comprising: a hub shell body 200 and the spoke plate 100; the hub shell body 200 is provided with a first mounting position 210 close to one end of the hub shell body 200, and the hub shell body 200 is provided with a second mounting position 220 close to another end of the hub shell body 200; the first mounting position 210 is used for mounting the spoke plate 100, and the second mounting position 220 is used for mounting the spoke plate 100; and the first mounting position 210 and the second mounting position 220 are matched with the first mounting hole 101.

In this embodiment, an angle between the matching surface of the first mounting position 210 and/or the second mounting position 220 with the first mounting hole 101 and a central axis of the hub shell body 200 is f, where f is 3 degrees, which allows for a tighter fit between the first mounting position 210 and the second mounting position 220 with the first mounting hole 101.

In this embodiment, the first mounting position 210 utilizes the spoke plate 100 from Embodiment 1, while the second mounting position 220 utilizes the spoke plate 100 from Embodiment 3. The first mounting position 210 and the second mounting position 220 can be paired with the same or different spoke plates 100 based on actual needs.

The plate body 110 is inclined towards a center of the hub shell body 200. In practical installation scenarios of this embodiment, the spoke plate 100 is located on one side of the rim 700, and the spoke 600, after connecting the rim 700 and the spoke plate 100, is in an inclined state rather than perpendicular to the ground. The inclined setting of the plate body 110 serves to guide the spoke 600.

### Embodiment 6

A wheel, comprising: a tire, a rim 700, a spoke 600 and the hub; one end of the spoke 600 is connected to a spoke plate 100 of the hub, and another end of the spoke 600 is connected to the rim 700; and the tire is provided on an outer side of the rim 700. In this embodiment, the hub is adopted to facilitate easy assembly and disassembly, thereby making maintenance and repairs more convenient.

### Embodiment 7

A bicycle, comprising: a frame and the wheel; and the wheel is mounted at a designated position on the frame.

The above are only preferred embodiments of the present disclosure, but the scope of protection of the present disclosure is not limited thereto, and any changes or substitutions that can be easily conceived of by those skilled in the art within the technical scope disclosed by the present disclosure shall fall within the protection scope of the present disclosure.

## Claims

1. A split-type carbon fiber spoke plate, comprising:
a plate body (110) and a first mounting hole (101) formed in a middle of the plate body (110), an inner wall of the first mounting hole (101) is obliquely arranged, a sectional shape of the first mounting hole (101) is non-circular, and the plate body (110) is made of a carbon fiber material.

2. The split-type carbon fiber spoke plate according to claim 1, wherein:
the middle of the plate body (110) is provided with a connecting portion (130), the first mounting hole (101) is formed in the connecting portion (130), and the connecting portion (130) protrudes from one side or two sides of the plate body (110); and the sectional shape of the first mounting hole (101) is polygonal, or a shape formed by a plurality of arc segments and straight segments connected end to end.

3. The split-type carbon fiber spoke plate according to claim 2, wherein:
an end of the first mounting portion (120) far from the plate body (110) extends towards the connecting portion (130) to form a retaining ring (123).

4. The split-type carbon fiber spoke plate according to claim 3, wherein:
a side face of the first mounting portion (120) is provided with spoke mounting hole (121) s for mounting spokes, the spoke mounting holes are divided into two groups, and the two groups of spoke mounting holes are staggered up and down on the first mounting portion (120) ;
a first mounting groove (122) is provided on one side of the spoke mounting holes close to the connecting portion (130);
the spoke mounting hole (121) is composed of a first hole (1211) and a second hole (1212) , and an axis of the first hole (1211) is connected to an axis of the first mounting hole (101); one end of the second hole (1212) is provided on one side of the first hole (1211) in a horizontal direction, and the second hole (1212) passes through the first hole (1211) obliquely; a guiding groove (1213) is provided on one side of the first hole (1211) far from the second hole (1212) ; and
the two groups of spoke mounting holes face in opposite directions.

5. The split-type carbon fiber spoke plate according to claim 2, wherein:
an edge of the plate body (110) extends in a direction away from the first mounting hole (101) to form a first carbon fiber sheet (310) and a second carbon fiber sheet (320), a mounting space for embedding spokes is formed between the first carbon fiber sheet (310) and the second carbon fiber sheet (320), the mounting space includes a first embedding groove (330) and a second embedding groove (340), the first embedding groove (330) and the second embedding groove (340) are alternately arranged along a circumference of the spoke plate (100), and a width b of the second embedding groove (340) is greater than a width a of the first embedding groove (330).

6. The split-type carbon fiber spoke plate according to claim 5, wherein:
two ends of the first embedding groove (330) are respectively a first end and a second end, a height of the first end is lower than that of the second end, the first end of two adjacent first embedding grooves is lower than the second end, and the first end and the second end of two adjacent first embedding grooves are communicated to form the second embedding groove (340); and
the first end and the second end of two adjacent first embedding grooves are connected through a transition curved surface; and the first embedding groove (330) fixes one spoke (600), and the second embedding groove (340) fixes two spokes.

7. The split-type carbon fiber spoke plate according to claim 2, wherein:
the edge of the plate body (110) is curved upwards to form a second mounting portion (410), a side of the second mounting portion (410) is provided with a second mounting hole (440), an mounting space is formed between the second mounting portion (410) and the spoke plate (100), and the mounting space communicates with the second mounting hole (440); an upper end portion of the second mounting portion (410) extends into the spoke plate (100) to form an extension segment (420), the second mounting hole (440) is used for clamping an end of the spoke (600), and the extension segment (420) covers the end; and the mounting space is provided with a second mounting groove (430) at a position corresponding to the second mounting hole (440), and the end is embedded in the second mounting groove (430); and
the second mounting groove (430) extends in a direction away from the connecting portion (130), and the sectional shape of the second mounting groove (430) is U-shaped.

8. The split-type carbon fiber spoke plate according to claim 7, wherein:
the second mounting portion (410) is inclined towards one end of an axial direction of the first mounting hole (101), and an angle between the second mounting portion (410) and a plane of the spoke plate (100) is c, where a value range of the angle c is 3-10°; and
the second mounting hole (440) is inclined in the same direction as the second mounting portion (410), and an angle between an axis of the second mounting hole (440) and the plane of the spoke plate (100) is d, where a value range of the angle d is 3-10°.

9. The split-type carbon fiber spoke plate according to claim 8, wherein:
further comprises a third cover plate (400); the extension segment (420) encloses to form a third groove, and the third cover plate (400) is embedded in the third groove; and a middle of the third cover plate (400) is provided with a third mounting hole, and the third mounting hole corresponds in position to the first mounting hole (101).

10. The split-type carbon fiber spoke plate according to claim 2, wherein:
the plate body (110) is provided with a fourth groove (520) for mounting spokes; one end of the spoke (600) extends to both sides to form a mounting portion (610), and the mounting portion (610) is mounted in the fourth groove (520); the plate body (110) is fixedly connected with a fourth cover plate (500), and the spoke (600), the spoke plate (100) and the fourth cover plate (500) are fixedly connected through an adhesive; and a middle of the fourth cover plate (500) is provided with a fourth mounting hole, and the fourth cover plate (500) is provided with a fifth groove (510) for mounting spokes.

11. A hub, comprising:
a hub shell body (200) and the spoke plate (100) according to any one of claims 1-10; the hub shell body (200) is provided with a first mounting position (210) close to one end of the hub shell body (200), and the hub shell body (200) is provided with a second mounting position (220) close to another end of the hub shell body (200); the first mounting position (210) is used for mounting the spoke plate (100) according to any one of claims 1-14, and the second mounting position (220) is used for mounting the spoke plate (100) according to any one of claims 1-14; and
the first mounting position (210) and the second mounting position (220) are matched with the first mounting hole (101).

12. The hub according to claim 11, wherein:
an angle between the matching surface of the first mounting position (210) and/or the second mounting position (220) with the first mounting hole (101) and a central axis of the hub shell body (200) is f, where a value range of f is 2-8 degrees.

13. The hub according to claim 12, wherein:
the plate body (110) is inclined towards a center of the hub shell body (200).

14. A wheel, comprising:
a tire, a rim (700), a spoke (600) and the hub according to claim 11; one end of the spoke (600) is connected to a spoke plate (100) of the hub, and another end of the spoke (600) is connected to the rim; and the tire is provided on an outer side of the rim.

15. A bicycle, comprising:
a frame and the wheel according to claim 11; and the wheel is mounted at a designated position on the frame.
